# EUROPEAN PATENT SPECIFICATION

(11) **EP 2 857 266 B1**
(45) Date of publication and mention of the grant of the patent: **21.06.2017**
(21) Application number: 13187197.2
(22) Date of filing: 03.10.2013
(51) Int. Cl.: B60R 21/38

(54) **Hinge arrangement**
Scharnieranordnung
Agencement de charnière

(43) Date of publication of application: 08.04.2015
(73) Proprietor: Volvo Car Corporation, 40531 Göteborg (SE)
(72) Inventor: Jaktling, Staffan, 42656 Västra Frölunda (SE); Zippert, Tommy, 41507 Göteborg (SE)
(74) Representative: Volvo Car Corporation

(56) References cited:
- EP-A1- 2 380 787
- EP-A1- 2 634 047

## Description

### TECHNICAL FIELD

The present disclosure relates to a hinge arrangement for a bonnet of a vehicle. The disclosure further relates to a vehicle comprising such a hinge arrangement.

### BACKGROUND

If a vehicle, such as a car, is involved in a frontal collision, there is a risk that the bonnet will intrude into the windshield of the vehicle as a result of the collision forces. There is therefore a desire, and in some countries also a legal requirement, that the hinges should be strong enough to prevent the bonnet from intruding into the windshield.

Legal requirements are for example given in FMVSS 219, Windshield Zone Intrusion, for the USA and EU Directive 2003/102/EC and 2004/90/EC for the EU.

Document EP 2 380 787 A1 discloses a hinge mechanism for a bonnet of a vehicle. The hinge mechanism provides a hinged connection between the bonnet and the body structure of the vehicle. The hinge mechanism comprises a first hinge member connectable to the bonnet, a second hinge member, having a first end and a second end, and a third hinge member connectable to the body structure. The first end of the second hinge member is connected to the first hinge member. The third hinge member comprises a first portion and a second portion. The second end of the second hinge member is pivotally connected to the third hinge member at the second portion. The second hinge member is arranged to engage with the first portion of the third hinge member, when the second hinge member is subjected to a longitudinal force, such that at least part of the longitudinal force is transferable to the first portion by means of the engagement. The first portion is adapted to take up forces in the longitudinal direction imparted on the first portion by the second hinge member.

However, according to EP 2 380 787 A1 the engagement between the second hinge member and the first portion of the third hinge member is obtained by deformation of one or both of the second and third hinge members, a deformation which may be difficult to perform in a controlled way.

A known drawback with hinge arrangements of many other prior art solutions is that they involve many different parts, which make them heavy and require large packaging volume, as well as making them expensive and difficult to mount in the vehicle at the production facility.

As may be realized from the above, there is a desire for an improved hinge arrangement, which is able to withstand a force having at least a longitudinal component, e.g. resulting from a frontal collision, in a controlled way.

### SUMMARY

The object of the present disclosure is to overcome or ameliorate at least one of the disadvantages of the prior art, and/or to provide a useful alternative.

It is desirable to provide a hinge arrangement, which is able to withstand a force having at least a longitudinal component, e.g. resulting from a frontal collision, in a controlled way.

It is further desirable that the hinge arrangement involves few parts and/or is easy to mount in the vehicle at the production facility.

Thus, in a first aspect of the present invention there is provided a hinge arrangement for a bonnet of a vehicle, the hinge arrangement in use providing a hinged connection between the bonnet and a body of the vehicle. The vehicle has a longitudinal direction and a vertical direction. The hinge arrangement comprises
- a first hinge member adapted to be attached, directly or indirectly, to the body of the vehicle, and
- a second hinge member adapted to be attached, directly or indirectly, to the bonnet. The first hinge member and the second hinge member are pivotally connected to each other at a first pivot axis providing the hinged connection. A first portion of the first hinge member comprises a first engagement means and a first portion of the second hinge member comprises a second engagement means. The second engagement means is arranged to engage with the first engagement means, when the second hinge member is subjected to a force having at least a longitudinal component, such that at least part of the force is transferable to the first hinge member by means of engagement of the first and second engagement means. The first portion of the second hinge member is arranged to be displaceable by a predefined displacement in relation to the first portion of the first hinge member in order to obtain the engagement of the first and second engagement means, when the second hinge member is subjected to the force.

The directions longitudinal, transverse and vertical relate to the vehicle. Longitudinal is along the normal driving direction. Transverse is perpendicular to the longitudinal direction but in the same horizontal plane, i.e. sideways or laterally in the vehicle. Vertical is perpendicular to that plane, i.e. in the height direction of the vehicle. The location words front and rear used below relate to the directions of the vehicle, where front is the part coming first in the normal forward driving direction. The directions and location words used herein to describe the hinge arrangement relate to the directions of the hinge arrangement when mounted in the vehicle.

The hinge arrangement is arranged such that the displacement is a geometrically guided predefined displacement, which occurs in a zone of the hinge arrangement being defined in the first hinge member as being above and rearward of the first engagement means and in the second hinge member as being rearward of the second engagement means.

The first engagement means may be adapted to act as a receiving means for the second engagement means, or vice versa. In the non-engaged state of the engagement members, the second hinge member is able move freely from the first hinge member while being pivotally connected at the first pivot axis in order to open the bonnet for e.g. maintenance and/or repair. In the engaged state, the force having at least a longitudinal component can be transferred from the second hinge member to the first hinge member by means of the engagement of the first and second engagement means. Purely as an example, the first and second hinge members may be arranged with a play between their respective engagement means, normally of some millimeters, allowing the second hinge member to move freely from the first hinge member, while being pivotally connected at the first pivot axis A1, when the engagement means are in the non-engaged state. The play may be between 0 and 15 mm, preferably between 1 and 10 mm, more preferably 2 and 5 mm in the longitudinal direction of the vehicle. The bonnet may further be arranged, such that opening of the bonnet is prevented, when the engagement means are in the engaged state, thereby reducing the risk of unintentional, and undesired, opening of the bonnet.

The first hinge member may be attached to the body of the vehicle by any suitable fastening means, for example by screwing or by welding at a lower attachment portion. It may be attached directly to the body, or via an additional member, such as a bracket.

The second hinge member may comprise an upper attachment portion for attachment to the bonnet by any suitable fastening means, for example by screwing or by welding.

As an alternative, which e.g. may be used for a deployable bonnet, the second hinge member may be attachable to the bonnet via a third hinge member, which is pivotally connected to the second hinge member. A deployable bonnet is characterized in that the rear part of the bonnet may be raised to an "impact position", a so called deployed position or pop-up position, such that the distance between the bonnet and any hard engine parts is increased in order to reduce the injuries of a vulnerable road user impacting with the bonnet.

The first portion of the first hinge member comprises at least the portion of the first hinge member comprising the first engagement means and the portion below of that. The first portion of the first hinge member may comprise the whole first hinge member, e.g. when the predefined displacement is arranged to occur between the first and the second hinge members. The first portion of the second hinge member comprises at least the portion of the second hinge member comprising the second engagement means and the portion forward of that. The first portion of the second hinge member may comprise the whole second hinge member, e.g. when the displacement is arranged to occur between the first and the second hinge members.

According to the disclosure, at least the first portion of the second hinge member is arranged to be displaceable by a predefined displacement in relation to at least the first portion of the first hinge member in order to obtain the engagement of the first and/or second engagement means, when the second hinge member is subjected to the force. The parts of the hinge arrangement are displaced in relation to each other due to a predefined, and thereby controlled, displacement. If the force is high, there may also be additional deformation of the hinge arrangement. The predefined displacement may be geometrically guided, e.g. defined by selecting the geometry of a slot or a notch, which guides the displacement. The predefined displacement differs from prior art solutions, wherein the parts, e.g. the first and second hinge member move in relation to each other due to deformation of a least a portion of the first and/or second hinge member. As mentioned above, such a deformation may be difficult to perform in a controlled way.

The displacement may occur between the first and the second hinge members, e.g. at the pivotal axis. As an alternative or a complement, the displacement may occur within the second hinge member, between the first portion and a second portion not comprising the second engagement means, i.e. being located rearward of the first portion. As yet an alternative, the displacement may occur within the first hinge member, between the first portion and a second portion not comprising the first engagement means, i.e. being located above and/or rearward of the first portion.

The force may be substantially longitudinal. Such a force may arise due to a frontal collision. By substantially longitudinal is meant that any vertical or transverse component of the force is less than the longitudinal component, preferably less than 75% of the longitudinal component, more preferably less than 50% of the longitudinal component and most preferably less than 25% of the longitudinal component. The displacement may be a substantially rearward displacement. By substantially rearward is meant that any vertical or transverse component of the force is less than the rearward component, the rearward component being in a longitudinal direction of the vehicle, preferably less than 75% of the rearward component, more preferably less than 50% of the rearward component and most preferably less than 25% of the rearward component.

The predefined displacement may comprise a longitudinal displacement distance d of 0<d<15 mm, preferably 1<d<10 mm, more preferably 2<d<5 mm in the longitudinal direction of the vehicle. In addition, the displacement may have a transverse or vertical component. If the first and second hinge members are arranged with a play between their respective engagement means, normally of some millimeters, the longitudinal displacement distance may be at least long enough to close the play.

At least one of the first or second engagement means may comprise a hook arranged to grip around the other of the first or second engagement means or in a notch in the other of the first or second engagement means to obtain the engagement. The hook should preferably be wide enough to grip the other engagement means. If one hook is used, it is preferably located in a horizontal plane, such that it, at least when engaged, can prevent lateral movement, except for the few millimeters within the hook. If both engagement means comprises a hook, they are preferably oriented with a 90 degree angle to each other. A few millimetres of extra width within the hook ensures that the movement of the second hinge member during opening of the bonnet is not obstructed in any way. For a deployable bonnet, the hook shape may help to facilitate for the bonnet to deploy to the deployed position without any interference between the second hinge member and the first hinge member.

The predefined displacement may be made between a first position of the first portion of the second hinge member in relation to the first portion of the first hinge member, in which first position the second hinge member is pivotally displaceable in relation to the first hinge member at the first pivot axis in order to open the bonnet, i.e. corresponding to the non-engaged state, and a second position of the first portion of the second hinge member in relation to the first portion of the first hinge member, corresponding to the engaged state of the first and second engagement means. The second position of the first portion of the second hinge member in relation to the first portion of the first hinge member is rearwards of the first position.

The first portion of the second hinge member and/or the first portion of the first hinge member may be biased towards the first position, preferably biased by means of a resilient member, such as a spring. The characteristics of the resilient member may be selected to provide a suitable preselectable threshold level for the force.

As an alternative, or a complement, the first portion of the second hinge member and/or the first portion of the first hinge member may be held in the first position by means of a breakable holding member, which is selected such that the holding member breaks if the force having a longitudinal component exceeds a threshold level. The breaking member may be located in the slot.

The predefined displacement may be defined by the geometry of a slot or notch comprised in one of the first or second hinge member, by means of a slide member moving in the slot or notch. The slide member may be attached to one of the hinge members or may be a separate unit, which may be inserted into a hole in the hinge member. The geometry of the slot or notch in that case defines the predefined displacement. Purely as an example, a slot or notch extending in the longitudinal direction will result in a predefined displacement in the longitudinal direction. The slot has a closed circumference, while the notch has an open end. Both the slot and the notch define a track for the slide member to move in. It is preferred to use the closed circumference of the slot, such that it is avoided that the slide member unintentionally is displaced out of the slot or notch.

The slot or notch may be located in the first hinge member above the first engagement means. The region of the slot or notch in that case delimits the first portion of the first hinge member from the second portion of the first member. The two portions of the first hinge member in that case are displaceable in relation to each other. In the region of the slot or notch, there may be an overlap of the first and second portions.

As an alternative, the slot or notch may be located in the second hinge member rearward of the second engagement means. The region of the slot or notch in that case delimits the first portion of the second hinge member from the second portion of the second hinge member. The two portions of the second hinge member in that case are displaceable in relation to each other. In the region of the slot or notch, there may be an overlap of the first and second portions.

The slot or notch may be comprised in one of the first or second hinge member and the slide member may be arranged in the other of the first or second hinge member.

As an alternative, the slide member may be arranged in the same of the first or second hinge member as the slot or notch. This may be the case if the predefined displacement occurs between the first and second portions of one of the hinge members.

The slot or notch may be located at the pivotal connection of the first and second hinge members, a pivot pin providing the pivot axis forming the slide member moving in the slot or notch. Thereby no extra slide member is used, which keeps the number of parts of the hinge arrangement low and facilitates mounting, since no extra step of inserting a slide member is performed.

If using a separate slide member, i.e. the pivot pin is not forming the slide member, the slide member may have any cross-sectional shape, which is suitable for displacement in the corresponding slot or notch, e.g. round, oval, square or rectangular. In some cases, a slide member having a non-round cross-sectional shape is preferred, since a non-round shape reduces the risk of unintentional, or undesired, pivotal movement around the slide member.

If using a slot or notch, a first end of the slot or notch may define the above-mentioned first position and a second opposite end of the slot or notch may define the above-mentioned second position.

If the slide member is located in the portion of the hinge arrangement, which is displaced by the predefined displacement, the first position will be defined by the front end of the slot, and the second position by the rear end of the slot, such that the portion of the hinge arrangement, which is displaced by the predefined displacement, can move in a rearward direction in relation to the body of the vehicle, when subjected to the force, e.g. in case of a frontal collision.

If instead the slot or notch is located in the portion of the hinge arrangement, which is displaced by the predefined displacement, the first position will be defined by the rear end of the slot, and the second position by the front end of the slot, such that the portion of the hinge arrangement, which is displaced by the predefined displacement, can move in a rearward direction in relation to the body of the vehicle, when subjected to the force, e.g. in case of a frontal collision.

The slot or notch may have a first width corresponding to the first position and a second width, being less than the first width, the second width being located adjacent to the first width, such that the slide member is arranged to pass the second width during displacement from the first position to the second position. The first width may be adapted to fit the diameter of the pivot pin or it may be slightly less. When the pivot pin is being displaced to the second position, it will pass a portion of the slot or notch having a second width which is less than the first width. The second width is also less than the diameter of the pivot pin. However, the second hinge member will be able to pass the second width, when being pushed by the longitudinal force, e.g. in case of a collision. By using a second width adjacent to the first position, the first position will be well defined. The relation between the second width and the diameter of the pivot pin is selected to provide a suitable threshold level for when the force is large enough to trigger the predefined displacement from the first position to the second position.

A resilient member may be used to bias the first portion of the second hinge member and/or the first portion of the first hinge member towards the first position, as mentioned above. The resilient member may in that case be located within the slot. Alternatively, the resilient member may extend between the one of the hinge members comprising the slot or notch and the pivot pin or the slide member. As yet another alternative, the resilient member may extend between the one of the hinge members comprising the slot or notch and the other hinge member. The task of the resilient member is to bias the first portion of the second hinge member relative to the first portion of the first hinge member to the first position.

In a second aspect of the present disclosure, there is provided a vehicle comprising a bonnet, a body and a hinge arrangement according to above, the hinge arrangement providing a hinged connection between the bonnet and the body of the vehicle. The vehicle has a longitudinal direction and a vertical direction.

### BRIEF DESCRIPTION OF THE DRAWINGS

The present invention will hereinafter be further explained by means of non-limiting examples with reference to the appended drawings wherein:
- Fig. 1: is a schematic side view of a front end of a vehicle,
- Fig. 2: illustrates a hinge arrangement in accordance with a first embodiment,
- Fig. 3: is a detailed view of the rear end of the hinge arrangement of Fig. 2,
- Fig. 4: illustrates the hinge arrangement of Fig. 2 with the engagement means in the engaged state,
- Fig. 5: is a detailed view of the rear end of the hinge arrangement of Fig. 4,
- Fig. 6: illustrates a hinge arrangement in accordance with a second embodiment,
- Fig. 7: illustrates a hinge arrangement in accordance with a third embodiment,
- Fig. 8: illustrates possible locations of a predefined displacement.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

The words front and rear used below relate to the vehicle, where front is the part coming first in the normal forward driving direction. The directions longitudinal, transverse and vertical also relate to the vehicle. Longitudinal is along the normal driving direction. Transverse is perpendicular to the longitudinal direction but in the same horizontal plane, i.e. sideways or laterally in the vehicle. Vertical is perpendicular to that plane.

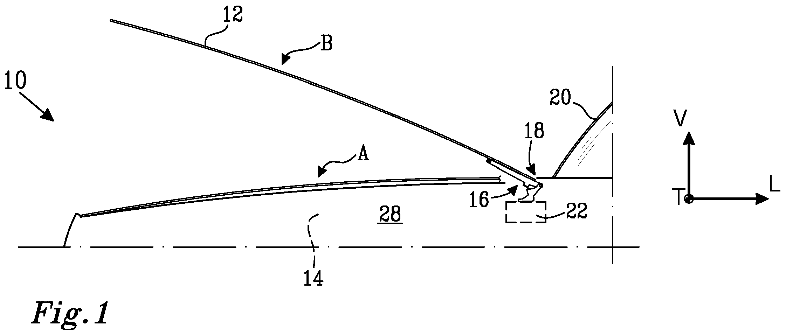

Figure 1 is a schematic side view of a front end of a vehicle 10, here a car. The vehicle 10 has a longitudinal direction L, a transverse direction T and a vertical direction V. The vehicle 10 is provided with a bonnet 12, which covers an engine compartment 14 and allows access to the engine compartment 14 for maintenance and/or repair. The bonnet 12 is connected to the vehicle 10 by a hinge arrangement 16, normally one hinge arrangement 16 adjacent to each lateral side of the bonnet 12. A rear end 18 of the bonnet 12 is directed towards a windscreen 20 of the vehicle 10. The hinge arrangements 16 are located adjacent to the rear end 18 of the bonnet 12. Normally the bonnet 12 is in a closed position A covering the engine compartment 14. The bonnet 12 can be displaced to an open position B allowing normal access to the engine compartment 14 for maintenance and/or repair. The vehicle 10 is normally stationary when displacing the bonnet to the open position B.

Some vehicles 1 may have a deployable bonnet, i.e. it is possible to displace the bonnet 12 to a deployed position, also called a pop-up position, e.g. after sensor input that the vehicle 10 is about to hit a vulnerable road user, such as a pedestrian or a cyclist, e.g. by means of an actuator 22. Normally, one or more sensors (not shown) are used to detect a collision with the vulnerable road user. In case of such a collision, the actuator 22 is activated. The actuator 22 may be an inflatable member, such as a pedestrian airbag, a pyrotechnical device, a mechanical spring, a compressed-air piston, an electrical lifter, a rack or a lifting arm. When the bonnet 12 is in the deployed position, a distance is formed between the bonnet 12 and hard parts of the engine, allowing deflection of the bonnet 12 without the risk of the head of the vulnerable road user hitting any hard parts of the engine. The bonnet 12 may be raised at both ends, but normally the rear end 18 is raised to a higher position than the front end. The distance formed between the bonnet 12 and the hard parts of the engine is typically between 50 and 130 millimetres.

However, it should be pointed out that the hinge arrangement according to this disclosure is suitable both for bonnet arrangements being able to assume the deployed position, as well as for bonnet arrangements not being able to assume the deployed position.

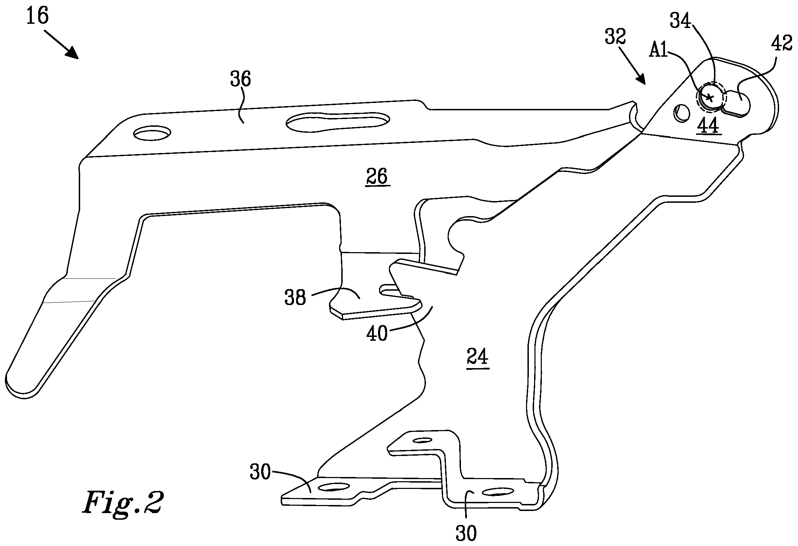

In Figure 2 a side view of a hinge arrangement 16 in accordance with a first embodiment is shown, assuming that the bonnet 12, to which the hinge arrangement 16 is arranged, is in the closed position A. The hinge arrangement 16 comprises a first hinge member 24 and a second hinge member 26.

The first hinge member 24 is adapted to be attached to a body 28 of said vehicle 10 by any suitable fastening means, for example by screwing or by welding at a lower attachment portion 30.

The second hinge member 26 comprises a hinge arm extending substantially in the longitudinal direction L of the vehicle 10. A rear end 32 of the second hinge member 26 is pivotally connected to the first hinge member 24 at a first pivot axis A1, e.g. by means of e.g. a pivot pin 34. The pivot pin 34 may be attached to the second hinge member 26 or may be a separate unit, which may be inserted into a pin hole in the second hinge member 26.

In the illustrated embodiment, with the hinge arrangement 16 allowing the bonnet 12 to be opened to the open position B but not to assume the deployed position, the second hinge member 26 comprises an upper attachment portion 36 for attachment to the bonnet 12 by any suitable fastening means, for example by screwing or by welding.

As an alternative, not illustrated, which may be used for a deployable bonnet, the second hinge member 26 may be attachable to the bonnet 12 via a third hinge member, which is pivotally connected to the second hinge member 24. Deployable bonnets and their functions are known to the skilled person e.g. from document EP 2 380 787 A1.

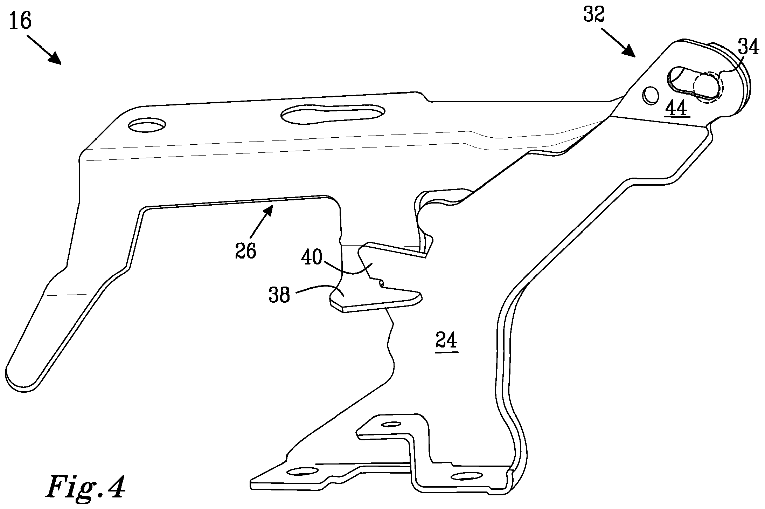

The second hinge member 26 comprises a second engagement means 38, in the illustrated example having the shape of a hook located in a substantially horizontal plane. The first hinge member 24 comprises a first engagement means 40, in this case a notch located in a substantially vertical plane, which is adapted to act as a receiving means for the second engagement means 38, i.e. the hook 38 is adapted to be able grip around the notch 40. Figure 2 illustrates the first 40 and second engagement means 38 in a non-engaged state relative to each other, while Figure 4, which is described below, illustrates the first 40 and second engagement means 38 in an engaged state relative to each other. In the non-engaged state, there is a play between the first 24 and second 26 hinge members, normally of some millimeters, allowing the second hinge member 26 to move freely from the first hinge member 24, while being pivotally connected at the first pivot axis A1, when the bonnet 12 is opened towards the open position B.

The first 40 and second engagement means 38 are arranged such that they, when engaged with each other, can transfer a force having at least a longitudinal component. Such a force may arise due to a frontal collision. The engagement will in that case reduce the risk, and preferably avoid the risk, of the bonnet 12 intruding into the windscreen 20 by taking up at least a portion of the force and/or decelerating the rearward movement of the bonnet 12.

The first hinge member 24 comprises a slot 42 located at an upper end 44 of the first hinge member 24. The slot 42 is arranged to receive the pivot pin 34 allowing pivotal displacement of the second hinge member 26 in relation to the first hinge member 24 for opening of the bonnet 12. The geometry of the slot 42 guides the displacement of the second hinge member 26 in relation to the first hinge member 24, when subjected to the force having at least a longitudinal component. Thereby the displacement is performed in a predefined controllable way.

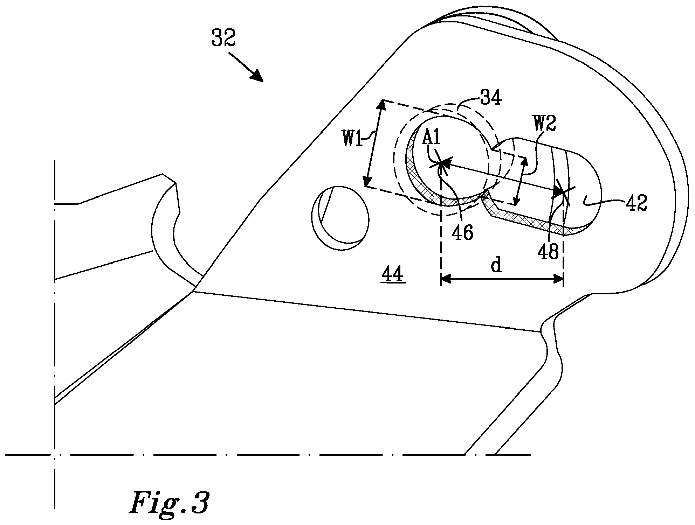

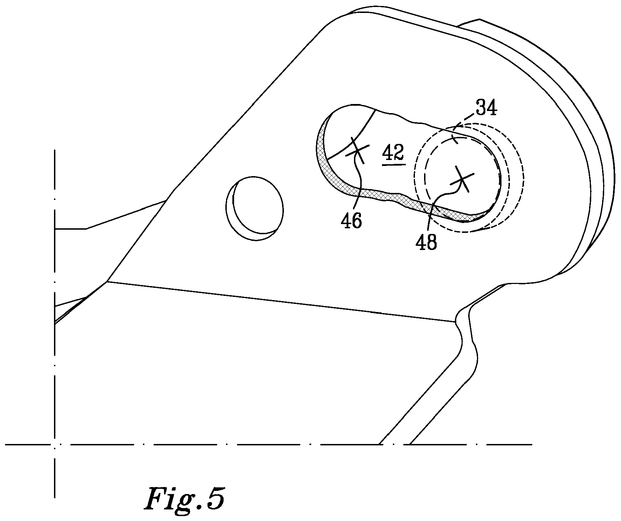

Figure 3 shows a detailed view of the upper end 44 of the first hinge member 24 comprising the slot 42, the rear end 32 of the second hinge member 26 and the pivot pin 34. The pivot pin 34 is in the illustrated embodiment attached to the second hinge member 26. The two ends of the slot 42 define a first position 46, corresponding to the non-engaged state of the engagement means 38, 40 illustrated in Figures 2 and 3, and a second position 48 corresponding to the engaged state of the engagement means 38, 40 illustrated in Figures 4 and 5. The slot 42 has a first width w1 when the pivot pin 34 is in the first position 46. The first width w1 may be adapted to fit the diameter of the pivot pin 34 or it may be slightly less. In the illustrated example the pivot pin 34 has a head with a large diameter helping it to stay in place. When the pivot pin 34 is being displaced to the second position 48, it will pass a portion of the slot 42 having a second width w2, which is less than the first width w1. The second width w2 is also less than the diameter of the pivot pin 34. However, the second hinge member 26 will be able to pass the second width w2, when being pushed by the force, e.g. in case of a collision. By using a second width w2 adjacent to the first position 46, the first position 46 will be well defined. The relation between the second width w2 and the diameter of the pivot pin 34 is selected to provide a suitable threshold level for when the force is large enough to trigger the predefined displacement from the first position 46 to the second position 48.

As an alternative, however not illustrated, the rear end 32 of the second hinge member 26 may instead comprise the slot, and the upper end 44 of the first hinge member 24 may instead have a pivot pin attached thereto, the pivot pin being displaceable in the slot, thereby allowing a predefined displacement of the second hinge member 26 in relation to the first hinge member 24 in order to reach the engaged state of the engagement means 38,40.

Figures 4 and 5 illustrate the hinge arrangement of Figures 2 and 3, when the first 40 and second engagement means 38 are in the engaged state relative to each other. The hook 38 grips around the notch 40. Due to the hook shape, a lateral movement between the second hinge member 26 and the first hinge member 24 within the hinge arrangement 16 is prevented, except for a few millimeters within the hook 38. Figure 5 shows a detailed view of the upper end 44 of the first hinge member 24 comprising the slot 42, the rear end 32 of the second hinge member 26 and the pivot pin 34. The pivot pin 34 is in the second position 48 defined by the rear end of the slot 42.

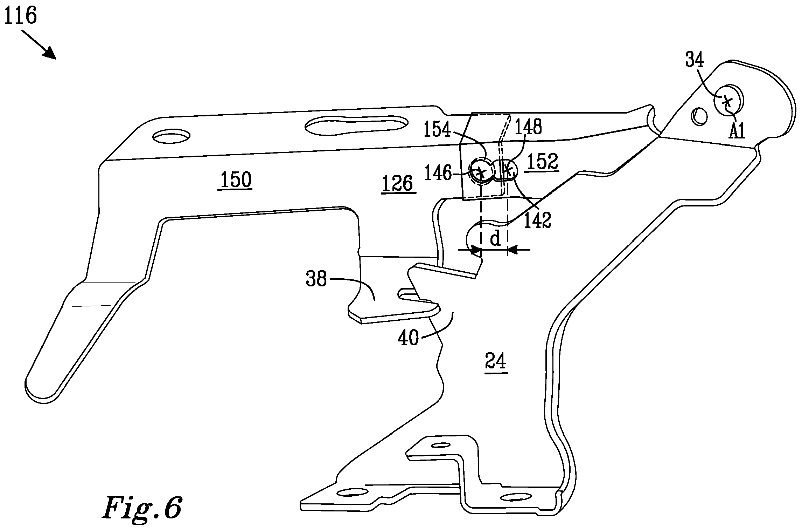

Figure 6 illustrates a hinge arrangement 116 according to a second embodiment. Most components are similar to the first embodiment and will not be mentioned again. The second hinge member 126 comprises a front portion 150 and a rear portion 152. The second engagement means 38 are comprised in the front portion 150. According to the second embodiment, there is a slot 142 located in one of the front portion 150 or the rear portion 152 of the second hinge member 26, anywhere longitudinally between the second engagement means 38 and the pivot axis A1, in the illustrated example in the rear portion 152. The other of the front portion 150 or the rear portion 152, in the illustrated example the front portion 150, comprises a slide member 154, located in the slot 142. The front portion 150 and the rear portion 152 overlap in the region of the slot 142. The rear portion 152 is further pivotally connected to the first hinge member 24 by means of the pivot pin 34 at the pivot axis A1 to provide the hinged connection, but cannot move longitudinally relative to the first hinge member 24 at the pivot axis A1. Similar as for the first embodiment, the slot 142 defines a first position 146, corresponding to the non-engaged state of the first 40 and second engagement means 38, and a second position 148 being rearward of the first position 146 corresponding to the engaged state of the first 40 and second engagement means 38. When subjected to a a force having at least a longitudinal component, e.g. in case of a collision, the front portion 150 comprising the second engagement means 38 will be displaced rearwards, while the slide member 154 moves in the slot 142 to the second position 148. The rear portion 152 is connected to the body 28 of the vehicle 10 via the first hinge member 24, such that the predefined displacement occurs between the front portion 150 and the rear portion 152.

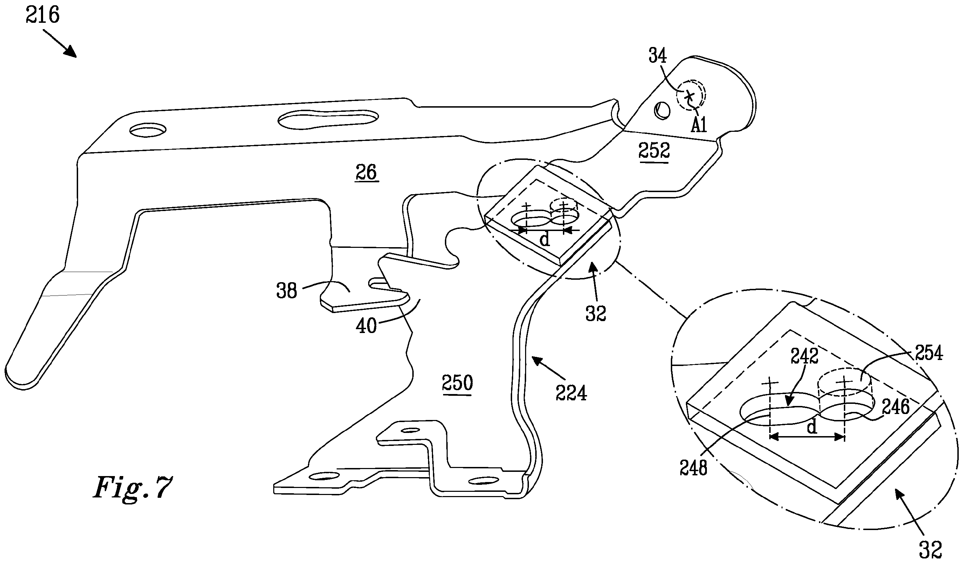

Figure 7 illustrates a hinge arrangement 216 according to a third embodiment. Most components are similar to the first embodiment and will not be mentioned again. The first hinge member 224 comprises a lower portion 250 and an upper portion 252. The first engagement means 40 is comprised in the lower portion 250. According to the third embodiment, there is a slot 242 located in one of the lower portion 250 or the upper portion 252 of the first hinge member 24, anywhere between first engagement means 40 and the pivot axis A1, in the illustrated example in the upper portion 252. The other of the lower portion 250 or the upper portion 252, in the illustrated example the lower portion 250, comprises a slide member 254, located in the slot 242. The second hinge member 26 is pivotally connected to the upper portion 252 by means of the pivot pin 34 at the pivot axis A1 to provide the hinged connection, but cannot move longitudinally relative to the upper portion 252 at the pivot axis A1. Similar as for the first embodiment, the slot 242 defines a first position 246, corresponding to the non-engaged state of the first 40 and second engagement means 38, and a second position 248 corresponding to the engaged state of the first 40 and second engagement means 38. When subjected to a a force having at least a longitudinal component, e.g. in case of a collision, the second hinge member 26 comprising the second engagement means 38 will be displaced rearwards together with the upper portion 252 of the first hinge member 224, while the slide member 254 moves in the slot 242 to the second position 248. The predefined displacement occurs between the upper portion 252 and the lower portion 250 of the first hinge member 224. Since the slot 242 in the illustrated example of Figure 7 is located in the portion of the hinge arrangement 16, which is displaced by the predefined displacement, the first position 246 corresponds to a rear end of the slot 242 and the second position 248 corresponds to a front end of the slot 242. This is opposite to the case for the first and second embodiments, where instead the slide member 34, 154 is located in the portion of the hinge arrangement 16, which is displaced by the predefined displacement.

If using a separate slide member 154, 254, as illustrated in the second and third embodiment, the slide member 154, 254 may have any cross-sectional shape, which is suitable for displacement in the corresponding slot 142, 242 or notch, e.g. round, oval, square or rectangular. In some cases, a slide member having a non-round cross-sectional shape is preferred, since a non-round shape reduces the risk of unintentional, or undesired, pivotal movement around the slide member.

The slot 42, 142, 242 is preferably substantially oriented in the longitudinal direction L, such that the second position 48, 148, 248, corresponding to an engaged state of the first 40 and second engagement means 38, is rearward of the first position 46,146 illustrated by the first and second embodiments, or in front of the first position 246 illustrated by the third embodiment, corresponding to a non-engaged state of the first 40 and second engagement means 38. The longitudinal displacement distance d between of the first position 46, 146, 246 and the second position 48, 148, 248 fulfills 0<d<15 mm, preferably 1<d<10 mm, more preferably 2<d<5 mm in the longitudinal direction. The longitudinal displacement distance d may be adapted such that the above-mentioned play between the first engagement means 40 and the second engagement means 38 is eliminated.

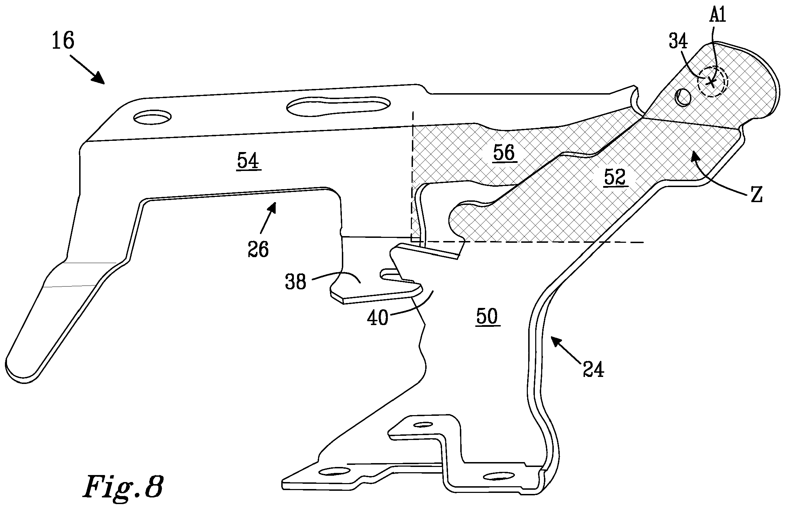

The slot 42, 142, 242 may be located anywhere in a zone Z of the hinge arrangement 16, 116, 216 delimited in the forward direction by the second engagement means 38 and in the vertical direction by the first engagement means 40. See the grey-shaded area of Figure 8. The engagement means 38, 40 are located outside of the zone Z.

A first portion 50 of the first hinge member 24 comprises at least the portion of the first hinge member 24 comprising the first engagement means 40 and the portion below that. The first portion 50 of the first hinge member 24 may comprise the whole first hinge member 24, as illustrated by the first and second embodiments, or there may be a second portion 52 of the first hinge member 24 located above and/or rearward of the first portion 50, as illustrated by the third embodiment.

The first 54 portion of the second hinge member 26 comprises at least the portion of the second hinge member 26 comprising the second engagement means 38 and the portion forward of that. The first portion 54 of the second hinge member 26 may comprise the whole second hinge member 26, as illustrated by the first and third embodiments, or there may be a second portion 56 of the second hinge member 26 located rearward of the first portion 54, as illustrated by the second embodiment.

The displacement may occur between the first 24 and the second 26 hinge members, e.g. at the pivotal axis A1, as illustrated for the first embodiment, see Figures 2-5. In that case, the first portions 50, 54 make up the whole hinge members 24, 26.

As an alternative or a complement, the displacement may occur within the second hinge member 26, between the first portion 54 and the second portion 56, as illustrated for the second embodiment, see Figure 6, wherein the front portion 150 corresponds to the first portion 54 and or the rear portion 152 to the second portion 56. The slot 142 is located within the zone Z.

As yet an alternative, the displacement may occur within the first hinge member 24, between the first portion 50 and the second portion 52, as illustrated for the third embodiment, see Figure 7, wherein the lower portion 250 corresponds to the first portion 50 and or the upper portion 252 to the second portion 52. The slot 242 is located within the zone Z.

As an alternative to having a slot 42, 142, 242 with a first width w1 and a smaller second width w2, the width of the slot 42, 142, 242, may be so narrow that it clamps the pivot pin 34 or the slide member 154, 254, such that the pivot pin 34 or the slide member 154, 254 has to overcome a clamping force in order to move from the first position 46, 146, 246 to the second position. The clamping force on the pivot pin 34 or the slide member 154, 254 may in that case be selected to provide a suitable preselectable threshold level for the force.

As another alternative, the pivot pin 34 or the slide member 154, 254 may be biased towards the first position 46, 146, 246, e.g. by means of a resilient member, such as a spring. The characteristics of the resilient member may be selected to provide a suitable preselectable threshold level for the force. The resilient member may be located within the slot 42, 142, 242. Alternatively, the resilient member may extend between the one of the hinge members comprising the slot 42, 142, 242 and the pivot pin 34 or the slide member 154, 254. As yet another alternative, the resilient member may extend between the one of the hinge members comprising the slot 42, 142, 242 and the other hinge member. The task of the resilient member is to bias the first portion of the second hinge member relative to the first portion of the first hinge member to the first position 46, 146, 246.

As yet another alternative, the pivot pin 34 or the slide member 154, 254 may be held in said first position by means of a breakable holding member, not illustrated, which is selected such that the holding member breaks, if the hinge arrangement 16, 116, 216 is subjected to a force having a longitudinal component exceeding a suitable preselectable threshold level, thereby allowing displacement to the second position.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A hinge arrangement (16, 116, 216) for a bonnet (12) of a vehicle (10), said hinge arrangement (16, 116, 216) in use providing a hinged connection between said bonnet (12) and a body (28) of said vehicle (10), said vehicle (10) having a longitudinal direction (L) and a vertical direction (V), said hinge arrangement (16, 116, 216) comprising
- a first hinge member (24, 224) adapted to be attached, directly or indirectly, to said body (28) of said vehicle (10), and
- a second hinge member (26, 126) adapted to be attached, directly or indirectly, to said bonnet (12),
said first hinge member (24, 224) and said second hinge member (26, 126) being pivotally connected to each other at a first pivot axis (A1) providing said hinged connection,
a first portion (50, 250) of said first hinge member (24, 224) comprising a first engagement means (40) and a first portion (54, 150) of said second hinge member (26, 126) comprising a second engagement means (38),
said second engagement means (38) being arranged to engage with said first engagement means (40), when said second hinge member (26, 126) is subjected to a force having at least a longitudinal component, such that at least part of said force is transferable to said first hinge member (24, 224) by means of engagement of said first and second engagement means (38, 40),
said first portion (54, 150) of said second hinge member (26, 126) is arranged to be displaceable by a displacement in relation to said first portion (50, 250) of said first hinge member (24, 224) in order to obtain said engagement of said first and second engagement means (38, 40), when said second hinge member (26, 126) is subjected to said force,
**characterized in that**
said hinge arrangement (16, 116, 216) being arranged such that said displacement is a geometrically guided predefined displacement, which occurs in a zone (Z) of said hinge arrangement (16, 116, 216) being defined in said first hinge member (24, 224) as being above and rearward of said first engagement means (40), and in said second hinge member (26, 126) as being rearward of said second engagement means (38).

2. The hinge arrangement (16, 116, 216) according to claim 1, wherein said force is substantially longitudinal and said predefined displacement is a substantially rearward displacement.

3. The hinge arrangement (16, 116, 216) according to any one of the preceding claims, wherein said predefined displacement comprises a longitudinal displacement distance (d) of 0<d<15 mm, preferably 1<d<10 mm, more preferably 2<d<5 mm in said longitudinal direction (L) of said vehicle (10).

4. The hinge arrangement (16, 116, 216) according to any one of the preceding claims, wherein at least one of said first or second engagement means (38, 40) comprises a hook arranged to grip around the other of said first or second engagement means (38, 40) to obtain said engagement.

5. The hinge arrangement (16, 116, 216) according to any one of the preceding claims, wherein said predefined displacement is made between a first position (46, 146, 246) of said first portion (54, 150) of said second hinge member (26, 126) in relation to said first portion (50, 250) of said first hinge member (24, 224), in which first position (46, 146, 246) said second hinge member (26, 126) is pivotally displaceable in relation to said first hinge member (24, 224) at said first pivot axis (A1), and a second relative position (48, 148, 248), corresponding to engagement of said first and/or second engagement means (38, 40), said second position (48, 148, 248) being rearward of said first position (46, 146, 246).

6. The hinge arrangement (16, 116, 216) according to claim 5, wherein said first portion (54, 150) of said second hinge member (26, 126) and/or said first portion (50, 250) of said first hinge member (24, 224) is biased towards said first position (46, 146, 246), preferably biased by means of a resilient member.

7. The hinge arrangement (16, 116, 216) according to any one of the preceding claims, wherein said first portion (54, 150) of said second hinge member (26, 126) and/or said first portion (50, 250) of said first hinge member (24, 224) are held in said first position (46, 146, 246) by means of a breakable holding member, which is selected such that said holding member breaks if said force having a longitudinal component exceeds a threshold level.

8. The hinge arrangement (16, 116, 216) according to any one of the preceding claims, wherein said predefined displacement is defined by the geometry of a slot (42, 142, 242) or notch comprised in one of said first or second hinge member (24, 224; 26, 126), by means of a slide member (34, 154, 254) moving in said slot (42, 142, 242) or notch.

9. The hinge arrangement (16, 116, 216) according to claim 8, wherein said slot (42, 142, 242) or notch is located in said first hinge member (24, 224) above said first engagement means (40) or in said second hinge member (26, 126) rearward of said second engagement means (38), said slot (42, 142, 242) or notch delimiting said first portion (50, 250; 54, 150) of said first or second hinge member (26, 126).

10. The hinge arrangement (16) according to claim 8 or 9, wherein said slot (42) or notch is comprised in one of said first (24) or second hinge member (26) and said slide member (34) is arranged in the other of said first (24) or second hinge member (26).

11. The hinge arrangement (116, 216) according to claim 8 or 9, wherein said slide member (154, 254) is arranged in the same of said first (224) or second hinge member (126) as said slot (142, 242) or notch.

12. The hinge arrangement (16) according to any one of claims 8-10, wherein said slot (42) or notch is located at said pivotal connection of said first and second hinge members (24, 26), a pivot pin (34) providing said pivot axis (A1) forming said slide member moving in said slot (42) or notch.

13. The hinge arrangement (16, 116, 216) according to any one of claims 8-12, when dependent on claim 5, a first end of said slot (42, 142, 242) or notch defining said first position (46, 146, 246) and a second opposite end of said slot (42, 142, 242) or notch defining said second position (48, 148, 248).

14. The hinge arrangement (16, 116, 216) according to any one of claims 8-13, when dependent on claim 5, wherein said slot (42, 142, 242) or notch has a first width (w1) corresponding to said first position (46, 146, 246) and a second width (w2), being less than said first width (w1), said second width (w2) being located adjacent to said first width (w1), such that said slide member (34, 154, 254) is arranged to pass said second width (w2) during displacement from said first position (46, 146, 246) to said second position (48, 148, 248).

15. A vehicle (10) comprising a bonnet (12), a body (28) and a hinge arrangement (16, 116, 216) according to any one of the preceding claims, said hinge arrangement (16, 116, 216) providing a hinged connection between said bonnet (12) and said body (28) of said vehicle (10), said vehicle (10) having a longitudinal direction (L) and a vertical direction (V).

## Patentansprüche

1. Scharnieranordnung (16, 116, 216) für eine Motorhaube (12) eines Fahrzeugs (10), wobei die Scharnieranordnung (16, 116, 216) im Gebrauch eine Scharnierverbindung zwischen der Motorhaube (12) und einer Karosserie (28) des Fahrzeugs (10) bereitstellt, wobei das Fahrzeug (10) eine Längsrichtung (L) und eine Vertikalrichtung (V) hat, und wobei die Scharnieranordnung (16, 116, 216) umfasst:
- ein erstes Scharnierelement (24, 224), das ausgebildet ist, um direkt oder indirekt an der Karosserie (28) des Fahrzeugs (10) befestigt zu werden, und
- ein zweites Scharnierelement (26, 126), das ausgebildet ist, um direkt oder indirekt an der Motorhaube (12) befestigt zu werden, wobei:
das erste Scharnierelement (24, 224) und das zweite Scharnierelement (26, 126) an einer ersten Schwenkachse (A1), wodurch die Scharnierverbindung bereitgestellt wird, schwenkbar miteinander verbunden sind,
ein erster Abschnitt (50, 250) des ersten Scharnierelements (24, 224) ein erstes Eingriffsmittel (40) umfasst, und ein erster Abschnitt (54, 150) des zweiten Scharnierelements (26, 126) ein zweites Eingriffsmittel (38) umfasst,
das zweite Eingriffsmittel (38) angeordnet ist, um in das erste Eingriffsmittel (40) einzugreifen, wenn das zweite Scharnierelement (26, 126) einer Kraft mit mindestens einer Längskomponente ausgesetzt ist, so dass mindestens ein Teil der Kraft durch Eingreifen der ersten und zweiten Eingriffsmittel (38, 40) auf das erste Scharnierelement (24, 224) übertragbar ist,
der erste Abschnitt (54, 150) des zweiten Scharnierelements (26, 126) angeordnet ist, um sich durch ein Verschieben im Verhältnis zum ersten Abschnitt (50, 250) des ersten Scharnierelements (24, 224) verschieben zu lassen, um so das Eingreifen der ersten und zweiten Eingriffsmittel (38, 40) zu erzielen, wenn das zweite Scharnierelement (26, 126) der Kraft ausgesetzt ist,
**dadurch gekennzeichnet, dass**
die Scharnieranordnung (16, 116, 216) so angeordnet ist, dass das Verschieben ein geometrisch geführtes vordefiniertes Verschieben ist, das in einer Zone (Z) der Scharnieranordnung (16, 116, 216) erfolgt, die im ersten Scharnierelement (24, 224) als oberhalb und hinter dem ersten Eingriffsmittel (40) liegend sowie im zweiten Scharnierelement (26, 126) als hinter dem zweiten Eingriffsmittel (38) liegend definiert ist.

2. Scharnieranordnung (16, 116, 216) nach Anspruch 1, bei der die Kraft im Wesentlichen in Längsrichtung wirkt und das vordefinierte Verschieben ein im Wesentlichen rückwärts erfolgendes Verschieben ist.

3. Scharnieranordnung (16, 116, 216) nach einem der vorstehend aufgeführten Ansprüche, bei der das vordefinierte Verschieben eine Längsverschiebungsdistanz (d) umfasst, die 0<d<15 mm, vorzugsweise 1<d<10 mm und besonders bevorzugt 2<d<5 mm in der Längsrichtung (L) des Fahrzeugs (10) beträgt.

4. Scharnieranordnung (16, 116, 216) nach einem der vorstehend aufgeführten Ansprüche, bei der mindestens eines der ersten oder zweiten Eingriffsmittel (38, 40) einen Haken umfasst, der angeordnet ist, um das andere der ersten oder zweiten Eingriffsmittel (38, 40) zu umgreifen, um so das Eingreifen zu erzielen.

5. Scharnieranordnung (16, 116, 216) nach einem der vorstehend aufgeführten Ansprüche, bei der das vordefinierte Verschieben zwischen einer ersten Position (46, 146, 246) des ersten Abschnitts (54, 150) des zweiten Scharnierelements (26, 126) im Verhältnis zum ersten Abschnitt (50, 250) des ersten Scharnierelements (24, 224), wobei in dieser ersten Position (46, 146, 246) das zweite Scharnierelement (26, 126) im Verhältnis zum ersten Scharnierelement (24, 224) an der ersten Schwenkachse (A1) schwenkbar verschiebbar ist, und einer zweiten relativen Position (48, 148, 248), entsprechend einem Eingreifen der ersten und/oder zweiten Eingriffsmittel (38, 40), erfolgt, wobei die zweite Position (48, 148, 248) hinter der ersten Position (46, 146, 246) liegt.

6. Scharnieranordnung (16, 116, 216) nach Anspruch 5, bei der der erste Abschnitt (54, 150) des zweiten Scharnierelements (26, 126) und/oder der erste Abschnitt (50, 250) des ersten Scharnierelements (24, 224) hin zur ersten Position (46, 146, 246), vorzugsweise durch ein elastisches Element, vorgespannt ist.

7. Scharnieranordnung (16, 116, 216) nach einem der vorstehend aufgeführten Ansprüche, bei der der erste Abschnitt (54, 150) des zweiten Scharnierelements (26, 126) und/oder der erste Abschnitt (50, 250) des ersten Scharnierelements (24, 224) durch ein zerbrechbares Halteelement in der ersten Position (46, 146, 246) gehalten werden, wobei das Halteelement so ausgewählt ist, dass es zerbricht, wenn die Kraft mit einer Längskomponente einen Schwellenwert übersteigt.

8. Scharnieranordnung (16, 116, 216) nach einem der vorstehend aufgeführten Ansprüche, bei der das vordefinierte Verschieben durch die Geometrie eines Schlitzes (42, 142, 242) oder einer Kerbe, der bzw. die in einem der ersten oder zweiten Scharnierelemente (24, 224; 26, 126) vorgesehen ist, mittels eines Gleitelements (34, 154, 254) definiert ist, das sich im Schlitz (42, 142, 242) oder in der Kerbe bewegt.

9. Scharnieranordnung (16, 116, 216) nach Anspruch 8, bei der sich der Schlitz (42, 142, 242) oder die Kerbe im ersten Scharnierelement (24, 224) oberhalb des ersten Eingriffsmittels (40) oder im zweiten Scharnierelement (26, 126) hinter dem zweiten Eingriffsmittel (38) befindet, wobei der Schlitz (42, 142, 242) oder die Kerbe den ersten Abschnitt (50, 250; 54, 150) des ersten oder zweiten Scharnierelements (26, 126) begrenzt.

10. Scharnieranordnung (16) nach Anspruch 8 oder 9, bei der der Schlitz (42) oder die Kerbe in einem der ersten (24) oder zweiten (26) Scharnierelemente vorgesehen ist, und wobei das Gleitelement (34) im anderen der ersten (24) oder zweiten (26) Scharnierelemente angeordnet ist.

11. Scharnieranordnung (116, 216) nach Anspruch 8 oder 9, bei der das Gleitelement (154, 254) in demselben der ersten (224) oder zweiten (126) Scharnierelemente wie der Schlitz (142, 242) oder die Kerbe angeordnet ist.

12. Scharnieranordnung (16) nach einem der Ansprüche 8 bis 10, bei der sich der Schlitz (42) oder die Kerbe an der Schwenkverbindung der ersten und zweiten Scharnierelemente (24, 26) befindet, wobei ein Schwenkstift (34), der die Schwenkachse (A1) bereitstellt, das Gleitelement bildet, das sich im Schlitz (42) oder in der Kerbe bewegt.

13. Scharnieranordnung (16, 116, 216) nach einem der Ansprüche 8 bis 12, soweit von Anspruch 5 abhängig, bei der ein erstes Ende des Schlitzes (42, 142, 242) oder der Kerbe die erste Position (46, 146, 246) definiert und ein zweites entgegengesetztes Ende des Schlitzes (42, 142, 242) oder der Kerbe die zweite Position (48, 148, 248) definiert.

14. Scharnieranordnung (16, 116, 216) nach einem der Ansprüche 8 bis 13, soweit von Anspruch 5 abhängig, bei der der Schlitz (42, 142, 242) oder die Kerbe eine erste Breite (w1), entsprechend der ersten Position (46, 146, 246), sowie eine zweite Breite (w2) hat, die geringer als die erste Breite (w1) ist, wobei die zweite Breite (w2) angrenzend an die erste Breite (w1) so vorgesehen ist, dass sich das Gleitelement (34, 154, 254) während des Verschiebens von der ersten Position (46, 146, 246) zur zweiten Position (48, 148, 248) an der zweiten Breite (w2) vorbeibewegt.

15. Fahrzeug (10), das eine Motorhaube (12), eine Karosserie (28) und eine Scharnieranordnung (16, 116, 216) nach einem der vorstehend aufgeführten Ansprüche umfasst, wobei die Scharnieranordnung (16, 116, 216) eine Scharnierverbindung zwischen der Motorhaube (12) und der Karosserie (28) des Fahrzeugs (10) bereitstellt, wobei das Fahrzeug (10) eine Längsrichtung (L) und eine Vertikalrichtung (V) hat.

## Revendications

1. Agencement de charnière (16, 116, 216) pour un capot (12) d'un véhicule (10), ledit agencement de charnière (16, 116, 216) assurant en service une connexion articulée entre ledit capot (12) et une carrosserie (28) dudit véhicule (10), ledit véhicule (10) ayant une direction longitudinale (L) et une direction verticale (V), ledit agencement de charnière (16, 116, 216) comprenant
- un premier élément de charnière (24, 224) apte à être attaché, directement ou indirectement, à ladite carrosserie (28) dudit véhicule (10), et
- un second élément de charnière (26, 126) apte à être attaché, directement ou indirectement, audit capot (12),
ledit premier élément de charnière (24, 224) et ledit second élément de charnière (26, 126) étant connectés de façon pivotante l'un à l'autre à un premier axe de pivot (A1) assurant ladite connexion articulée,
une première partie (50, 250) dudit premier élément de charnière (24, 224) comprenant un premier moyen d'engagement (40) et une première partie (54, 150) dudit second élément de charnière (26, 126) comprenant un second moyen d'engagement (38),
ledit second moyen d'engagement (38) étant agencé de façon à s'engager avec ledit premier moyen d'engagement (40), lorsque ledit second élément de charnière (26, 126) est soumis à une force présentant au moins une composante longitudinale, de telle manière qu'au moins une partie de cette force puisse être transférée audit premier élément de charnière (24, 224) au moyen d'un engagement desdits premier et second moyens d'engagement (38, 40),
ladite première partie (54, 150) dudit second élément de charnière (26, 126) est agencée de façon à être déplaçable par un déplacement par rapport à ladite première partie (50, 250) dudit premier élément de charnière (24, 224) afin d'obtenir ledit engagement desdits premier et second moyens d'engagement (38, 40), lorsque ledit second élément de charnière (26, 126) est soumis à ladite force,
**caractérisé en ce que** ledit agencement de charnière (16, 116, 216) est agencé de telle manière que ledit déplacement soit un déplacement prédéfini géométriquement guidé, qui se produit dans une zone (Z) dudit agencement de charnière (16, 116, 216) qui est définie dans ledit premier élément de charnière (24, 224) comme étant située au-dessus et en arrière dudit premier moyen d'engagement (40), et dans ledit second élément de charnière (26, 126) comme étant située en arrière dudit second moyen d'engagement (38).

2. Agencement de charnière (16, 116, 216) selon la revendication 1, dans lequel ladite force est sensiblement longitudinale et ledit déplacement prédéterminé est un déplacement sensiblement vers l'arrière.

3. Agencement de charnière (16, 116, 216) selon l'une quelconque des revendications précédentes, dans lequel ledit déplacement prédéfini comprend une distance de déplacement longitudinal (d) de 0<d<15 mm, de préférence 1<d<10 mm, de préférence encore 2<d<5 mm dans ladite direction longitudinale (L) dudit véhicule (10).

4. Agencement de charnière (16, 116, 216) selon l'une quelconque des revendications précédentes, dans lequel au moins un desdits premier et second moyens d'engagement (38, 40) comprend un crochet agencé de façon à s'agripper autour de l'autre desdits premiers et second moyens d'engagement (38, 40) pour obtenir ledit engagement.

5. Agencement de charnière (16, 116, 216) selon l'une quelconque des revendications précédentes, dans lequel ledit déplacement prédéfini est effectué entre une première position (46, 146, 246) de ladite première partie (54, 150) dudit second élément de charnière (26, 126) par rapport à ladite première partie (50, 250) dudit premier élément de charnière (24, 224), première position (46, 146, 246) dans laquelle ledit second élément de charnière (26, 126) est déplaçable par pivotement par rapport audit premier élément de charnière (24, 224) audit premier axe de pivot (A1), et une seconde position relative (48, 148, 248), correspondant à l'engagement desdits premier/second moyens d'engagement (38, 40), ladite seconde position (48, 148, 248) étant située en arrière par rapport à ladite première position (46, 146, 246).

6. Agencement de charnière (16, 116, 216) selon la revendication 5, dans lequel ladite première partie (54, 150) dudit second élément de charnière (26, 126) et/ou ladite première partie (50, 250) dudit premier élément de charnière (24, 224) est poussée en direction de ladite première position (46, 146, 246), de préférence poussée au moyen d'un élément élastique.

7. Agencement de charnière (16, 116, 216) selon l'une quelconque des revendications précédentes, dans lequel ladite première partie (54, 150) dudit second élément de charnière (26, 126) et/ou ladite première partie (50, 250) dudit premier élément de charnière (24, 224) sont maintenues dans ladite première position (46, 146, 246) au moyen d'un élément de maintien frangible, qui est sélectionné de telle manière que ledit élément de maintien frangible se rompe si ladite force ayant une composante longitudinale dépasse un niveau de seuil.

8. Agencement de charnière (16, 116, 216) selon l'une quelconque des revendications précédentes, dans lequel ledit déplacement prédéfini est défini par la géométrie d'une fente (42, 142, 242) ou d'une encoche comprise dans un dudit premier ou dudit second élément de charnière (24, 224; 26, 126), au moyen d'un élément glissant (34, 154, 254) se déplaçant dans ladite fente (42, 142, 242) ou encoche.

9. Agencement de charnière (16, 116, 216) selon la revendication 8, dans lequel ladite fente (42, 142, 242) ou encoche est située dans ledit premier élément de charnière (24, 224) au-dessus dudit premier élément d'engagement (40) ou dans ledit second élément de charnière (26, 126) en arrière dudit second moyen d'engagement (38), ladite fente (42, 142, 242) ou encoche délimitant ladite première partie (50, 250; 54, 150) dudit premier ou dudit second élément de charnière (26, 126).

10. Agencement de charnière (16) selon la revendication 8 ou 9, dans lequel ladite fente (42) ou encoche est comprise dans un dudit premier (24) ou dudit second (26) élément de charnière et ledit élément glissant (34) est agencé dans l'autre dudit premier (24) ou dudit second (26) élément de charnière.

11. Agencement de charnière (116, 216) selon la revendication 8 ou 9, dans lequel ledit élément glissant (154, 254) est agencé dans le même dudit premier (224) ou dudit second (126) élément de charnière que ladite fente (142, 242) ou encoche.

12. Agencement de charnière (16) selon l'une quelconque des revendications 8 à 10, dans lequel ladite fente (42) ou encoche est située à ladite connexion pivotante desdits premier et second éléments de charnière (24, 26), une broche de pivot (34) assurant ledit axe de pivot (A1) formant ledit élément glissant qui se déplace dans ladite fente (42) ou encoche.

13. Agencement de charnière (16, 116, 216) selon l'une quelconque des revendications 8 à 12, lorsqu'elle dépend de la revendication 5, une première extrémité de ladite fente (42, 142, 242) ou encoche définissant ladite première position (46, 146, 246) et une seconde extrémité opposée de ladite fente (42, 142, 242) ou encoche définissant ladite seconde position (48, 148, 248).

14. Agencement de charnière (16, 116, 216) selon l'une quelconque des revendications 8 à 13, lorsqu'elle dépend de la revendication 5, dans lequel ladite fente (42, 142, 242) ou encoche a une première largeur (w1) correspondant à ladite première position (46, 146, 246) et une seconde largeur (w2), qui est inférieure à ladite première largeur (w1), ladite seconde largeur (w2) étant située à proximité de ladite première largeur (w1), de telle manière que ledit élément glissant (34, 154, 254) soit agencé de façon à franchir ladite seconde largeur (w2) pendant un déplacement de ladite première position (46, 146, 246) à ladite seconde position (48, 148, 248).

15. Véhicule (10) comprenant un capot (12), une carrosserie (28) et un agencement de charnière (16, 116, 216) selon l'une quelconque des revendications précédentes, ledit agencement de charnière (16, 116, 216) assurant une connexion articulée entre ledit capot (12) et ladite carrosserie (28) dudit véhicule (10), ledit véhicule (10) ayant une direction longitudinale (L) et une direction verticale (V).
